# EUROPÄISCHE PATENTSCHRIFT

(11) **EP 4 107 049 B1**
(45) Veröffentlichungstag und Bekanntmachung des Hinweises auf die Patenterteilung: **10.01.2024**
(21) Anmeldenummer: 21707175.2
(22) Anmeldetag: 16.02.2021
(51) Int. Cl.: B62D 1/181, F16H 25/20, F16H 25/24

(54) **VERSTELLANTRIEB FÜR EINE LENKSÄULE UND LENKSÄULE FÜR EIN KRAFTFAHRZEUG**
ADJUSTMENT DRIVE FOR A STEERING COLUMN, AND STEERING COLUMN FOR A MOTOR VEHICLE
ENTRAÎNEMENT DE RÉGLAGE POUR COLONNE DE DIRECTION ET COLONNE DE DIRECTION POUR VÉHICULE AUTOMOBILE

(30) Priorität: 20.02.2020 DE 102020202196
(43) Veröffentlichungstag der Anmeldung: 28.12.2022
(73) Patentinhaber: thyssenkrupp Presta AG, 9492 Eschen (LI); thyssenkrupp AG, 45143 Essen (DE)
(72) Erfinder: HUBER, Sebastian, 6811 Göfis (AT)
(74) Vertreter: thyssenkrupp Intellectual Property GmbH
(86) Internationale Anmeldenummer: PCT/EP2021/053694
(87) Internationale Veröffentlichungsnummer: WO 2021/165218

(56) Entgegenhaltungen:
- EP-B1- 1 084 355
- DE-A1-102017 207 561

## Beschreibung

### Stand der Technik

Die Erfindung betrifft einen Verstellantrieb gemäß dem Oberbegriff des Patentanspruchs 1. Weiters betrifft die Erfindung eine Lenksäule gemäß dem Oberbegriff des Patentanspruchs 15.

Lenksäulen für Kraftfahrzeuge weisen eine Lenkwelle mit einer Lenkspindel auf, an deren in Fahrtrichtung hinteren, dem Fahrer zugewandten Ende ein Lenkrad zur Einbringung eines Lenkbefehls durch den Fahrer angebracht ist. Die Lenkspindel ist um ihre Längsachse in einer Stelleinheit drehbar gelagert, die von einer Trageinheit an der Fahrzeugkarosserie gehalten ist. Dadurch, dass ein Innenmantelrohr der Stelleinheit, auch kurz als Mantelrohr bezeichnet, in einer mit der Trageinheit verbundenen Manteleinheit, auch als Führungskasten, Außenmantelrohr oder Kastenschwinge bezeichnet, in Richtung der Längsachse teleskopartig verschiebbar aufgenommen ist, kann eine Längenverstellung erfolgen. Eine Höhenverstellung kann dadurch realisiert werden, dass die Stelleinheit oder eine diese aufnehmende Manteleinheit schwenkbar an der Trageinheit gelagert ist. Die Verstellung der Stelleinheit in Längen- bzw. Höhenrichtung ermöglicht die Einstellung einer ergonomisch komfortablen Lenkradposition relativ zur Fahrerposition in Betriebsstellung, auch als Fahr- oder Bedienposition bezeichnet, in der ein manueller Lenkeingriff erfolgen kann.

Es ist im Stand der Technik bekannt, zur Verstellung der Stelleinheit relativ zur Trageinheit einen motorischen Verstellantrieb mit einer Antriebseinheit mit einem Antriebsmotor vorzusehen, der - in der Regel über ein Getriebe - mit einem Spindeltrieb verbunden ist, der eine in eine Spindelmutter eingeschraubte Gewindespindel umfasst. Durch die Antriebseinheit sind die Gewindespindel und die Spindelmutter gegeneinander um die Spindelachse drehend antreibbar, wodurch diese je nach Drehrichtung in Richtung der Spindelachse translatorisch aufeinander zu oder voneinander weg bewegt werden können. In einer Ausführungsform, einem sogenannten Rotationsspindeltrieb, ist die Gewindespindel von der Antriebseinheit, die feststehend mit der Stelleinheit oder der Trageinheit verbunden ist, um ihre Gewindespindelachse drehend antreibbar und greift in die Spindelmutter ein, die an der Trageinheit oder der Stelleinheit bezüglich Drehung um die Spindelachse feststehend angebracht ist. Axial, d.h. in Richtung der Spindelachse, stützt sich die Gewindespindel über den Koppelabschnitt an der Trageinheit oder der Stelleinheit ab, und die Spindelmutter entsprechend an der Stelleinheit oder der Trageinheit, so dass ein rotatorischer Antrieb der Gewindespindel eine translatorische Verstellung von Trageinheit und Stelleinheit relativ zueinander bewirkt. In einer alternativen Ausführungsform, die als Tauchspindeltrieb bezeichnet wird, ist die Gewindespindel bezüglich Drehung um ihre Spindelachse mit ihrem Koppelabschnitt unverdrehbar mit der Trageinheit oder der Stelleinheit gekoppelt und die Spindelmutter ist drehbar, aber in Richtung der Spindelachse feststehend entsprechend an der Stelleinheit oder der Trageinheit gelagert. Wie in der ersten Ausführungsform stützt sich die Gewindespindel über den Koppelabschnitt in Richtung der Spindelachse axial an der Trageinheit oder der Stelleinheit ab, und die Spindelmutter entsprechend an der Stelleinheit oder der Trageinheit, so dass die Gewindespindel durch die Antriebseinheit in Richtung der Spindelachse translatorisch verschiebbar ist. In beiden Ausführungen bildet der Spindeltrieb einen zwischen Trageinheit und Stelleinheit wirksamen motorischen Verstellantrieb, durch den die Stelleinheit zur Verstellung relativ zur Trageinheit verstellt werden kann. Ein gattungsgemäßer Verstellantrieb ist beispielsweise in der DE 10 2017 207 561 A1 beschrieben.

Zur Realisierung einer Längsverstellung der Stelleinheit in Richtung der Längsachse der Lenkspindel kann ein Spindeltrieb eines Verstellantriebs zwischen dem Mantelrohr der Stelleinheit und einer dieses axial längsverschieblich aufnehmenden Manteleinheit angeordnet sein, welche mit der Trageinheit verbunden ist, und wobei die Spindelachse im Wesentlichen parallel zur Längsachse ausgerichtet sein kann.

Zur Höhenverstellung kann ein Verstellantrieb zwischen der Trageinheit und einer daran höhenverstellbar gelagerten Stelleinheit angeordnet sein.

An einer Lenksäule können eine motorische Längs- und Höhenverstellung einzeln oder in Kombination ausgebildet sein.

Im manuellen Fahrbetrieb kann das Lenkrad für einen bequemen manuellen Lenkeingriff innerhalb eines Bedienbereichs, der einen Teilbereich des gesamten möglichen Verstellbereichs oder Verstellwegs bildet und auch als Betriebs- oder Komfortbereich bezeichnet wird, mittels des oder der Verstellantriebe zur Anpassung an die individuelle Fahrerposition angepasst werden. Wenn kein manueller Lenkeingriff erforderlich ist, beispielsweise im autonomen Fahrbetrieb eines autonom fahrenden Fahrzeugs und/oder zum Ein- und Aussteigen aus dem Fahrzeug, kann die Lenksäule in Längs- und/oder Höhenrichtung möglichst weit ein- oder zusammengefahren werden, um das Lenkrad in eine Verstauposition außerhalb des Bedienbereichs zu bringen, so dass der Fahrzeuginnenraum für eine anderweitige Nutzung freigegeben werden kann. Zwischen dem Bedienbereich und der Verstauposition befindet sich ein Übergangsbereich, in dem kein Lenkeingriff vorgesehen ist. Zum Verstauen oder umgekehrt zum Bereitstellen in Bedienposition muss die Lenksäule mittels des Verstellantriebs aus der Verstauposition durch den Übergangsbereich bis in den Bedienbereich verstellt werden oder umgekehrt.

Innerhalb des Bedienbereichs muss der Verstellantrieb eine hohe Steifigkeit aufweisen, und Geräuschbildung soll vermieden werden, wobei für eine genaue und bequeme Einstellung der Lenkradposition eine relativ geringe Verstellgeschwindigkeit vorteilhaft ist. Im Übergangsbereich soll die Verstellgeschwindigkeit möglichst hoch sein, um ein schnelles Verstauen und Bereitstellen des Lenkrads zu ermöglichen.

Um eine hohe Steifigkeit zu realisieren, ist es beispielsweise aus der genannten DE 10 2017 207 561 A1 bekannt, das Außengewinde der Gewindespindel spielarm oder spielfrei im Innengewinde der Spindelmutter zu verspannen. Dadurch ist jedoch die Reibung zwischen Außen- und Innengewinde relativ hoch, und damit einhergehend auch der Schraubwiderstand, auch als Schraubmoment bezeichnet, der das relative Drehmoment angibt, welches von der Antriebseinheit zwischen Gewindespindel und Spindelmutter aufgebracht werden muss, um die Spindelmutter im unbelasteten Gewindeeingriff für eine axiale Verlagerung relativ zum Außengewinde zu drehen. Nachteilig daran ist, dass eine hohe Antriebsleistung des Verstellantriebs bereitgestellt werden muss, um eine hohe Verstellgeschwindigkeit im Übergangsbereich zu ermöglichen. Dadurch wird der Verstellantrieb schwer, voluminös und hat einen hohen Energieverbrauch. Ein kleiner dimensionierter Verstellantrieb hat den Nachteil, dass auch im Übergangsbereich nur eine langsame Verstellung - wie im Bedienbereich - möglich ist, was im Betrieb nicht akzeptabel ist. Insofern besteht ein Zielkonflikt im Hinblick auf die Lösung der unterschiedlichen Anforderungen.

Angesichts der vorangehend erläuterten Problematik ist es eine Aufgabe der vorliegenden Erfindung, einen verbesserten Verstellantrieb anzugeben, der eine optimierte Verstellung über den gesamten Verstellbereich ermöglicht.

### Darstellung der Erfindung

Diese Aufgabe wird erfindungsgemäß gelöst durch den Verstellantrieb mit den Merkmalen des Anspruchs 1 und die Lenksäule mit einem derartigen Verstellantrieb gemäß Anspruch 15. Vorteilhafte Weiterbildungen ergeben sich aus den Unteransprüchen.

Bei einem Verstellantrieb für eine Lenksäule für ein Kraftfahrzeug, umfassend eine Gewindespindel, die mit einem Außengewinde in eine Spindelmutter eingreift, und eine Antriebseinheit, die mit der Gewindespindel oder der Spindelmutter derart gekoppelt ist, dass die Gewindespindel und die Spindelmutter relativ zueinander drehend unter Überwindung eines Schraubwiderstandes antreibbar sind, ist erfindungsgemäß vorgesehen, dass die Gewindespindel mindestens einen Aktuatorabschnitt und mindestens einen Übergangsabschnitt aufweist, wobei der Übergangsabschnitt derart ausgebildet ist, dass der Schraubwiderstand der Spindelmutter im Übergangsabschnitt kleiner ist als im Aktuatorabschnitt.

Die Gewindespindel, welche sich in axialer Richtung längs ihrer Spindelachse erstreckt, weist erfindungsgemäß unterschiedlich ausgestaltete Gewindeabschnitte, also Längsabschnitte des Außengewindes, auf, wobei mindestens ein sich über einen Teilbereich des Außengewindes längs erstreckender Gewindeabschnitt als Aktuatorabschnitt ausgestaltet ist, der auch als Betätigungsabschnitt bezeichnet wird. Mindestens ein weiterer Gewindeabschnitt außerhalb des Aktuatorabschnitts ist als Übergangsabschnitt ausgestaltet, auch als Zwischenabschnitt bezeichnet.

Der Schraubwiderstand, der auch als Schraubmoment bezeichnet wird, ist definiert durch das relative Drehmoment, welches durch den Verstellantrieb erzeugt und zwischen Gewindespindel und Spindelmutter angelegt werden muss, um die Spindelmutter in unbelasteten Gewindeeingriff relativ zum Außengewinde zu drehen und eine relative axiale Verlagerung zu erzeugen. Das Schraubmoment wird maßgeblich beeinflusst durch die zwischen Innen- und Außengewinde wirksamen Reibungskräfte. Der Schraubwiderstand ist indirekt proportional zu dem Wirkungsgrad des aus Spindelmutter und Gewindespindel gebildeten Spindeltriebs.

Erfindungsgemäß ist im Aktuatorabschnitt ein relativ hohes Schraubmoment akzeptabel. Dies ermöglicht, das Außengewinde der Gewindespindel und das Innengewinde der Spindelmutter gezielt bezüglich der Erhöhung der Steifigkeit der Gewindeverbindung und einer Verringerung möglicher Geräuschentwicklung hin zu optimieren. Beispielsweise kann ein möglichst geringes Gewindespiel vorgesehen sein, oder eine Verspannung von Innen- und Außengewinde, wodurch die Steifigkeit erhöht wird, und damit einhergehend auch das Schraubmoment.

Im Übergangsabschnitt wird aus besagten Gründen eine möglichst leichte Verstellbarkeit angestrebt, zumindest eine leichtere Verstellbarkeit als im Aktuatorabschnitt. Erfindungsgemäß kann die durch eine Anpassung des Außengewindes an das Innengewinde der Spindelmutter realisiert werden, durch die eine Reduzierung des Schraubmoments erzeugt wird. Konkret ist erfindungsgemäß vorgesehen, dass das Schraubmoment im Übergangsabschnitt kleiner ist als im Aktuatorabschnitt. Beispielsweise kann das Schraubmoment durch die Reibung des Gewindes vorgegeben werden. Die Reibung kann im Übergangsabschnitt beispielsweise durch ein relativ zum Aktuatorabschnitt vergrößertes Gewindespiel reduziert werden, oder durch einen Wegfall oder eine Reduzierung einer im Aktuatorabschnitt vorgesehenen Verspannung von Innen- und Außengewinde, wodurch die Gewindereibung verglichen mit dem Aktuatorabschnitt ebenfalls reduziert werden kann.

Es sind auch andere Maßnahmen denkbar und möglich, welche geeignet sind, um die Gewindereibung und damit den Schraubwiderstand durch die Ausgestaltung des Außengewindes der Gewindespindel im Längsabschnitt des Übergangsabschnitts relativ zum Aktuatorabschnitt zu verringern, beispielsweise durch unterschiedliche Materialien, Oberflächenstrukturen, geometrische Formen und/oder Abmessung der Gewindegänge, oder dergleichen. Dabei kann eine Verringerung der Steifigkeit ohne Probleme in Kauf genommen werden, da die Spindelmutter den Übergangsabschnitt immer nur kurzzeitig beim Verstauen oder Bereitstellen des Lenkrads passiert, und währenddessen keine Lenkeingabe oder Momentübertragung erfolgt.

Durch die leichtere Verstellbarkeit aufgrund des geringeren Schraubwiderstands im Übergangsbereich kann durch eine Antriebseinheit mit gleicher Antriebsleistung eine vorteilhafte höhere lineare Verstellgeschwindigkeit des Verstellantriebs realisiert werden. Alternativ kann eine geringere Antriebsleistung vorgesehen sein. Ein Vorteil der Erfindung ist, dass der Aktuatorabschnitt und der Übergangsabschnitt unabhängig voneinander im Hinblick auf die spezifischen Anforderungen optimiert werden können. Dadurch kann der im Stand der Technik bestehende Zielkonflikt bezüglich einer hohen Steifigkeit im Bedienbereich der Lenksäule und einer hohen Verstellgeschwindigkeit im Übergangsabschnitt ohne unbefriedigende Kompromisse gelöst werden.

Ein weiterer Vorteil ist, dass eine Optimierung bestehender Konstruktionen von Verstellantrieben mit geringem Aufwand durch Einsatz einer erfindungsgemäß ausgestalteten Gewindespindel ermöglicht wird. In diesem Zusammenhang ist es ebenfalls problemlos und mit geringem Aufwand möglich, durch eine entsprechende Ausgestaltung von Aktuator- und Übergangsabschnitten einen Verstellantrieb an unterschiedliche Bauformen von Lenksäulen anzupassen, die beispielsweise unterschiedlich lange Aktuator- und Übergangsabschnitte aufweisen. Es ist weiterhin vorteilhaft, dass der erfindungsgemäße Wechsel des Schraubwiderstands selbsttätig und ohne zusätzliche Schaltelemente erfolgt, wenn die Spindelmutter beim Verstellen die Gewindespindel vom Aktuator- in den Übergangsabschnitt passiert, oder umgekehrt.

Der Aktuatorabschnitt korrespondiert bevorzugt mit einem Verstellbereich der Lenksäule, in dem eine hohe Steifigkeit und geringes Spiel erforderlich ist, beispielsweise dem eingangs genannten Bedienbereich, und/oder auch einem Verstaubereich, welcher einen Verstellbereich bezeichnet, der vom Bedienbereich aus gesehen am anderen Ende des Verstellwegs liegt und in dem sich die Verstauposition befindet. Auch im Verstaubereich ist es nämlich vorteilhaft, dass durch geringes Spiel unerwünschte Vibrationen und Geräuschbildung bei verstauter Lenksäule unterdrückt werden. Die Länge eines Aktuatorabschnitts kann bevorzugt der Länge des Bedienbereichs einer längenverstellbaren Lenksäule entsprechen, die einen erfindungsgemäßen Verstellantrieb als Längsverstellantrieb aufweist. Ein weiterer Aktuatorabschnitt kann entsprechend mit einem in Richtung der Längsachse erstreckten Verstaubereich korrespondieren.

Der Übergangsabschnitt korrespondiert mit einem Verstellbereich der Lenksäule, in dem eine höhere Verstellgeschwindigkeit als im Bedienbereich angestrebt wird, beispielsweise einem eingangs genannten Übergangsbereich zwischen Bedien- und Verstauposition einer Lenksäule. Die Steifigkeit und das Gewindespiel sind in dem Übergangsbereich von untergeordneter Bedeutung. Dank der Erfindung kann dort eine Optimierung im Hinblick auf leichtgängige Verstellbarkeit und hohe Verstellgeschwindigkeit erfolgen.

Aktuator- und Übergangsabschnitte sind bevorzugt über definierte Axial- oder Längenabschnitte des Außengewindes ausgebildet und erstrecken sich bevorzugt über mehrere Gewindegänge, besonders bevorzugt über die gleiche oder eine größere Zahl von Gewindegängen als das Innengewinde der Spindelmutter aufweist.

Ein erfindungsgemäßer Verstellantrieb kann als Längsverstellantrieb einer längenverstellbaren Lenksäule eingesetzt sein, wobei die Gewindespindel im Wesentlichen parallel zur Längsachse der Lenksäule angeordnet ist, und die Spindelmutter und die Gewindespindel jeweils mit in Längsrichtung relativ zueinander teleskopartig verstellbaren Mantelrohren verbunden sind. Es ist ebenfalls möglich, dass ein erfindungsgemäßer Verstellantrieb als Höhenverstellantrieb in einer Höhenrichtung quer zur Längsachse zwischen der Stelleinheit und der Trageinheit einer höhenverstellbaren Lenksäule eingesetzt ist. Mindestens ein erfindungsgemäßer Verstellantrieb kann auch an einer längen- und höhenverstellbaren Lenksäule eingesetzt sein.

Es ist gleichermaßen möglich, eine erfindungsgemäße Gewindespindel in einem Tauchspindelantrieb oder in einem Rotationsspindelantrieb einzusetzen.

Ein Aktuatorabschnitt kann bevorzugt in einem Endbereich der Gewindespindel angeordnet sein. Diese Anordnung korrespondiert mit dem Bedienbereich der Lenksäule, und in der Regel auch mit dem Verstaubereich, die beide in Verstellbereichen nahe den Endlagen in maximal ausgefahrener bzw. maximal eingefahrener Endposition des Verstellwegs liegen. In diesen Verstellbereichen der Lenksäule befindet sich die Spindelmutter jeweils in einem Endbereich der Gewindespindel.

Es kann vorgesehen sein, dass mindestens zwei Aktuatorabschnitte vorgesehen sind, zwischen denen ein Übergangsabschnitt angeordnet ist. Die zwei Aktuatorabschnitte korrespondieren bevorzugt mit dem Bedienbereich, der sich an dem einen, in Fahrtrichtung hinteren Endbereich des Verstellwegs befindet, und mit dem Verstaubereich, der sich an dem anderen Ende des Verstellwegs befindet. Damit korrespondierend können die zwei Aktuatorabschnitte bevorzugt in den beiden Endbereichen der Gewindespindel angeordnet sein. Zwischen den Aktuatorabschnitten liegt der erfindungsgemäß ausgestaltete Übergangsabschnitt, welcher einen Zwischenabschnitt bildet, der beim Verstauen und Bereitstellen Wechsel zwischen den beiden Aktuatorabschnitten von der Spindelmutter passiert werden muss.

Eine Möglichkeit zur Realisierung der Erfindung ist, dass das Gewindespiel im Übergangsabschnitt größer ist als im Aktuatorabschnitt. Dadurch, dass das axiale Spiel zwischen den Gewindeflanken von Außen- und Innengewinde größer ist, kann die Reibung reduziert werden, wodurch der Schraubwiderstand ebenfalls reduziert werden kann. Beispielsweise kann die axiale Breite eines Gewindezahns im Übergangsabschnitt verkleinert werden, oder die Breite des Gewindegangs vergrößert. Derartige Maßnahmen sind fertigungstechnisch einfach zu realisieren und im Betrieb sicher und effektiv.

Eine vorteilhafte Ausführung der Erfindung sieht vor, dass der Aktuatorabschnitt mindestens ein Vorspannelement aufweist, welches gegen einen Gewindegang der Spindelmutter vorgespannt ist, und der Übergangsabschnitt kein Vorspannelement aufweist oder ein Übergangsvorspannelement aufweist, welches schwächer gegen den Gewindegang der Spindelmutter vorgespannt ist als das Vorspannelement des Aktuatorabschnitts. Das Vorspannelement ist ausgebildet, um das Außengewinde der Gewindespindel im Innengewinde der Spindelmutter zu verspannen. Durch die Verspannung wird das Gewindespiel reduziert, und die Steifigkeit des Spindeltriebs wird erhöht. Dabei wird die Gewindereibung und damit der Schraubwiderstand auch erhöht. Dadurch, dass im Übergangsabschnitt das Vorspannelement weggelassen ist, entfällt dort die Verspannung. Folglich ist das Gewindespiel größer und die Steifigkeit geringer als im Aktuatorabschnitt. Die Gewindereibung und damit der Schraubwiderstand ist jedoch geringer, wodurch die vorangehend beschriebenen erfindungsgemäßen Vorteile realisiert werden können. Falls der Schraubwiderstand im Übergangsbereich weniger reduziert werden soll als durch Weglassen des Vorspannelements, ist es auch denkbar, dort ein sogenanntes Übergangsvorspannelement vorzusehen, welches im Übergangsabschnitt eine geringere Vorspannkraft ausübt als das Vorspannelement im Aktuatorabschnitt, so dass immer noch ein erfindungsgemäß reduzierter Schraubwiderstand realisiert wird. Das Weglassen oder Anpassen des Vorspannelements im Übergangsabschnitt ist konstruktiv und fertigungstechnisch mit geringem Aufwand realisierbar und betriebssicher.

Es kann mit Vorteil vorgesehen sein, dass das Vorspannelement im Zahnprofil eines schraubenförmig umlaufenden Gewindezahns des Außengewindes angeordnet ist. Das Außengewinde weist zumindest einen schraubenförmig umlaufenden Gewindezahn auf, mit einem von axialen Zahnflanken begrenzten Zahnprofil bzw. Zahnquerschnitt. Das Zahnprofil greift dabei von innen in den korrespondierenden Gewindegang im Innengewinde der Spindelmutter ein. Ein Vorspannelement kann im Verlauf oder in einer Lücke des Gewindezahns ausgebildet sein, und ist vom Zahnprofil aus gesehen, quer zum Verlauf des Gewindezahns axial in den Gewindegang gerichtet. Dabei wird das Vorspannelement mit einer Vorspannkraft gegen die gegenüberliegende Zahnflanke des Innengewindes belastet, so dass im Effekt der Gewindezahn quer zu seiner schraubenförmigen Erstreckung in dem Gewindegang des Innengewindes verspannt ist. Das Außengewinde ist folglich axial in dem Innengewinde verspannt. Durch die von dem Vorspannelement ausgeübte Vorspannkraft können die Zahnflanken von Gewindeelement und Spindelmutter spielfrei gegeneinander verspannt sein. Daraus resultiert eine laufruhige, vibrationsarme und präzise Verstellung im Aktuatorabschnitt. Die Höhe der Vorspannkraft bestimmt die Gewindereibung und damit den Schraubwiderstand. Dabei korrespondiert die Höhe des Schraubwiderstands mit der Höhe der Vorspannkraft. Wird das Vorspannelement im Übergangsabschnitt weggelassen, ist dort der Schraubwiderstand entsprechend verringert.

Eine vorteilhafte Ausführung ist, dass das Vorspannelement zumindest ein Federelement aufweist. Durch das Federelement kann das Vorspannelement bevorzugt axial gegen eine Gewinde- bzw. Zahnflanke des Innengewindes vorgespannt sein.

Das Federelement kann bevorzugt an der Gewindespindel in einen Gewindegang des Außengewindes vorstehend ausgebildet sein, bevorzugt axial vorstehend. Das Federelement kann bevorzugt quer zur schraubenförmigen Erstreckung des Gewindezahns elastisch ausgebildet sein, d.h. im Wesentlichen in axialer Richtung, und kann bevorzugt eine von der Gewindespindel radial vorstehende Federzunge oder ein Federblatt aufweisen. Beim Eingriff in die Spindelmutter kann das Federelement federnd mit einer Zahnflanke, oder auch mit den beiden Zahnflanken eines Gewindegangs des Innengewindes der Spindelmutter in Kontakt kommen, und mit der durch die Federkraft ausgeübten Vorspannkraft verspannt werden. Dadurch kann die Gewindespindel spielfrei in dem Innengewinde der Spindelmutter elastisch verspannt werden.

Ein Federelement kann im Verlauf des Gewindezahns angeordnet oder ausgebildet sein, oder in einer Lücke im schraubenförmigen Verlauf des Gewindezahns, die beispielsweise eine über einen Längenabschnitt des Außengewindes, bevorzugt über eine Mehrzahl von Windungen des Gewindegangs durchgehende Nut oder Abflachung gebildet wird. In der Lücke kann ein Federelement angeordnet sein, beispielsweise ein radial vorstehendes Federblatt oder ein Federkörper. Dabei kann das Federelement im entspannten Zustand breiter sein als der Gewindezahn und derart in axialer Richtung in den Gewindegang zwischen den Windungen des Gewindezahns vorstehen, dass es axial gegen die Zahnflanke des Innengewindes verspannt wird, wenn die Spindelmutter beim Verstellen mit dem das Vorspannelement aufweisenden Gewindeabschnitt in Eingriff gelangt, da das Federelement beim in Eingriff bringen elastisch verformt wird. In vorteilhafter Weise ist eine optimal angepasste Gestaltung des Federelements mit geringem Aufwand möglich.

Es ist möglich, dass das Vorspannelement einen Schmiermittelabstreifer aufweist. Dadurch, dass das Vorspannelement mit Vorspannung an der Zahnflanke anliegt, kann der dadurch gebildete definierte Gleitkontakt mit Vorteil dazu genutzt werden, ein eingesetztes Schmiermittel, beispielsweise ein Schmierfett, beim Verstellen gleichmäßig über das Gewinde zu verteilen. Ein Schmiermittelabstreifer kann einfach durch eine angeformte Kante oder Lippe gebildet werden.

Eine weitere Möglichkeit zur Realisierung der Erfindung kann vorsehen, dass das Außengewinde im Übergangsabschnitt reibungsvermindernd und/oder im Aktuatorabschnitt reibungserhöhend ausgestaltet ist. Durch eine unterschiedliche Materialpaarung, Oberflächenstruktur, Rauigkeiten oder dergleichen kann die Gewindereibung im Übergangsabschnitt relativ zum Aktuatorabschnitt ebenfalls definiert reduziert werden, so dass der Schraubwiderstand der Spindelmutter im Übergangsabschnitt erfindungsgemäß kleiner ist als im Aktuatorabschnitt.

Eine vorteilhafte Ausführung der Erfindung kann vorsehen, dass die Gewindespindel ein Kernelement aufweist, welches zumindest abschnittweise koaxial fest umgeben ist von einem Gewindeelement, welches das Außengewinde aufweist.

Das Kernelement bildet eine kraftaufnehmende Struktur der Gewindespindel und kann bevorzugt aus einem Werkstoff mit einer höheren Festigkeit als das Gewindeelement ausgebildet sein. Bevorzugt besteht das Kernelement aus einem metallischen Werkstoff, vorzugsweise aus Stahl oder einer Aluminiumlegierung. Dadurch kann bei einem relativ geringen Materialquerschnitt eine ausreichend hohe Belastbarkeit realisiert werden.

Das Gewindeelement trägt das Außengewinde, welches in das korrespondierende Innengewinde der Spindelmutter eingreift, d.h. eingeschraubt ist, und kann bevorzugt aus einem Kunststoff ausgebildet sein. Dadurch kann ein vorteilhaftes Gleitverhalten und ein relativ geringer, gleichmäßiger Schraubwiderstand auch im Aktuatorbereich realisiert werden.

Das Kernelement ist langgestreckt stab- oder stangenförmig ausgebildet, und kann bevorzugt eine zylindrische oder prismenförmige Grundform haben, bevorzugt mit einem kleineren Querschnitt als dem Kernquerschnitt des Außengewindes der Gewindespindel. Das Kernelement ist erfindungsgemäß zumindest abschnittweise bezüglich seiner axialen Länge von dem Gewindeelement umgeben. Das Gewindeelement ist fest und bevorzugt unlösbar mit dem Kernelement verbunden, und dadurch sowohl gegen relative Drehung in Umfangsrichtung als auch gegen axiale Verschiebung in Längsrichtung gesichert.

Es ist vorteilhaft, dass das Kernelement zumindest abschnittweise rohrförmig ausgebildet ist. Dadurch, dass das Kernelement als rohrförmiger Hohlkörper, bevorzugt hohlzylindrisch ausgebildet ist, kann Gewicht eingespart werden. Außerdem kann effektiv Wärme aus der Gewindespindel abgeleitet werden, sowohl bei der Fertigung im Kunststoff-Spritzguss, als auch im Verstellbetrieb, indem ein Kühlmedium zumindest teilweise den Hohlkörper durchströmt. Vorzugsweise wird ein hohles Kernelement aus einem metallischen Werkstoff gefertigt, beispielsweise als Stahlrohr.

Ein hohles Kernelement bietet weiterhin die vorteilhafte Möglichkeit, dass das Kernelement einen quer zu seiner Längserstreckung zusammenquetschten Verformungsabschnitt aufweist, in dem ein Koppelabschnitt zur Verbindung mit der Lenksäule ausgebildet ist. Der Koppelabschnitt kann durch einen Verformungsabschnitt, auch als Pressabschnitt bezeichnet, gebildet werden, in dem ein Rohrabschnitt quer zur Achse plastisch flach verquetscht ist.

Das Gewindeelement kann hülsenförmig ausgebildet und auf dem Kernelement festgelegt sein. Das Gewindeelement kann als separate Gewindehülse bevorzugt aus Kunststoff bereitgestellt werden, beispielsweise als Kunststoff-Spritzgussteil. Das Geweindeelement weist auf seinem Außenumfang das Außengewinde auf, und ist innen drehschlüssig und axial fest mit dem Kernelement verbunden. Die Verbindung kann bevorzugt form- und/oder stoffschlüssig erfolgen, durch Aufpressen, Verkleben, Verschweißen oder dergleichen.

Eine bevorzugte Weiterbildung ist, dass das Gewindeelement an dem Kernelement im Kunststoff-Spritzguss angespritzt ist. Das Kernelement ist dabei mit dem als Kunststoff-Spritzgussteil ausgebildeten Gewindeelement umspritzt. Zur Herstellung wird ein stab- oder stangenförmiges Kernelement, welches voll oder hohl ausgebildet sein kann, in den gewindeförmigen Formhohlraum einer Spritzgießmaschine eingebracht, in den schmelzflüssiger thermoplastischer Kunststoff eingespritzt wird. Dadurch wird das Gewindeelement erzeugt und gleichzeitig stoffschlüssig mit dem Kernelement verbunden.

Ein Vorteil der Erfindung ergibt sich auch bei der Fertigung im Spritzguss daraus, wenn das erfindungsgemäße Kernelement aus einem metallischen Werkstoff gebildet ist und eine höhere Wärmeleitfähigkeit hat als das Gewindeelement. Dadurch kann die Kunststoffschmelze schneller abkühlen und erstarren, was eine vorteilhafte Reduzierung der Fertigungszeit ermöglicht.

Es kann vorgesehen sein, dass das Kernelement mindestens ein mit dem Gewindeelement formschlüssig verbundenes Formschlusselement aufweist. Das Formschlusselement kann mit dem Gewindeelement in Eingriff stehende Vorsprünge, Vertiefungen, Oberflächenstrukturierungen wie eine Aufrauhung, Rändelung oder dergleichen umfassen. Die formschlüssige Verbindung kann dadurch erzeugt werden, dass bei der Befestigung auf dem Kernelement das Formschlusselement in das separat bereitgestellte Gewindeelement plastisch eingeformt wird. Beim Anspritzen des Gewindeelements im Kunststoff-Spritzguss kann das Formschlusselement direkt in die Kunststoffschmelze eingebettet werden, wodurch eine besonders feste, stoff- und formschlüssige Verbindung erzeugt wird.

In einer vorteilhafte Weiterbildung kann vorgesehen sein, dass ein Getrieberad zumindest teilweise mit dem Gewindeelement ausgebildet ist. Das Gewindeelement kann ein Getrieberad aufweisen, oder zumindest Teile davon, beispielsweise eine Nabe, oder eine koaxiale Verzahnung, in die ein vom Antriebsmotor der Antriebseinheit angetriebenes Antriebsrad eingreift. Dadurch kann die Gewindespindel zur Bildung eines Rotationsspindeltriebs drehend angetrieben werden. Das Getrieberad kann ganz oder teilweise einstückig mit dem Gewindeelement ausgebildet sein, bevorzugt aus dem Kunststoff des Gewindeelements. Im Spritzgussverfahren kann das Getrieberad vorzugsweise einstückig zusammen mit dem Gewindeelement unmittelbar an das Kernelement angespritzt sein.

Es kann vorgesehen sein, dass die Gewindespindel ein Anschlagelement aufweist. Ein Anschlagelement kann beispielsweise einen radial über das Gewinde vorstehenden Vorsprung umfassen, beispielsweise einen außen ausgebildeten Kragen, der nicht durch die Spindelmutter hindurch geschraubt werden kann und dadurch einen axialen Endanschlag für die translatorische Bewegung der Gewindespindel relativ zur Spindelmutter bildet. Das Anschlagelement kann an der Gewindespindel festgelegt sein oder einstückig damit ausgebildet. Es kann auch an einem Kernelement ausgebildet sein, beispielsweise durch plastische Aufweitung oder Einformung der Wandung eines rohrförmigen Kernelements. Alternativ oder zusätzlich kann ein axialer Anschlag durch eine geeignete Formgebung eins Kunststoff-Spritzgussteils erfolgen, beispielsweise des Gewindeelements.

Eine erfindungsgemäß ausgestalteter Verstellantrieb kann als Längsverstellantrieb an einer längenverstellbaren Lenksäule und zusätzlich oder alternativ als Höhenverstellantrieb an einer höhenverstellbaren Lenksäule eingesetzt sein. Die Lenksäule kann zusätzlich einen Höhenverstellantrieb aufweisen, der ebenfalls erfindungsgemäß ausgestaltet sein kann.

Die Erfindung umfasst weiterhin eine Lenksäule für ein Kraftfahrzeug, mit einer Trageinheit, die an einer Fahrzeugkarosserie anbringbar ist, und von der eine Stelleinheit gehalten ist, in der eine Lenkspindel drehbar gelagert ist, und mit einem Verstellantrieb, der eine Gewindespindel, die mit einem Außengewinde in eine Spindelmutter eingreift, und eine Antriebseinheit umfasst, der mit der Gewindespindel oder der Spindelmutter derart gekoppelt ist, dass die Gewindespindel und die Spindelmutter relativ drehend zueinander antreibbar sind, wobei der Verstellantrieb mit der Trageinheit oder der Stelleinheit verbunden ist, bei dem erfindungsgemäß der Verstellantrieb ausgebildet ist gemäß einer der vorangehend beschriebenen Ausführungsformen.

Der Verstellantrieb kann zumindest einen Koppelabschnitt aufweisen, der an einer Gewindespindel ausgebildet sein kann. Beispielsweise kann dieser einen Gelenkkopf mit einer Befestigungsbohrung, oder andere Befestigungsmittel aufweisen, die mit korrespondierenden Befestigungsmitteln an den relativ zueinander verstellbaren Teilen der Lenksäule angeordnet sind.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische perspektivische Ansicht einer erfindungsgemäßen Lenksäule,
- Figur 2: eine weitere perspektivische Ansicht der erfindungsgemäßen Lenksäule gemäß Figur 1,
- Figur 3: ein erfindungsgemäßer Verstellantrieb in einer schematischen perspektivischen Darstellung,
- Figur 4: eine vergrößerte Detailansicht der Gewindespindel des Verstellantriebs gemäß Figur 3,
- Figur 5: einen Längsschnitt durch den Verstellantrieb gemäß Figur 3 entlang der Spindelachse,
- Figur 6: eine vergrößerte Detailansicht von Figur 5,
- Figur 7: eine Detailansicht einer zweiten Ausführungsform des Außengewindes der Gewindespindel in einer Ansicht wie in Figur 4,
- Figur 8: eine Detailansicht einer dritten Ausführungsform des Außengewindes der Gewindespindel.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

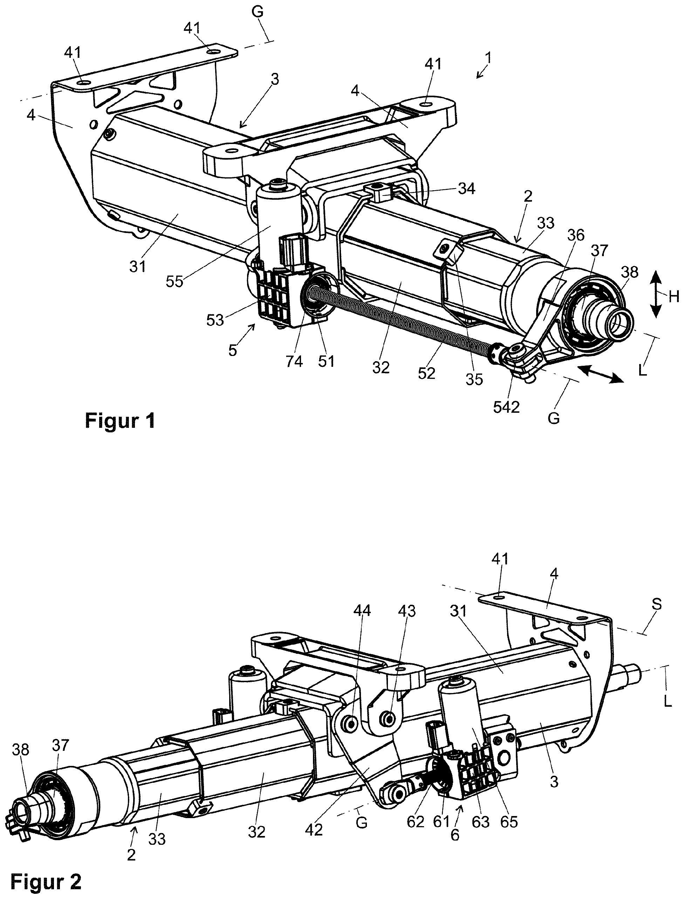

Figur 1 zeigt eine erfindungsgemäße Lenksäule 1 in einer schematischen perspektivischen Ansicht von oben links schräg auf das hintere Ende, bezogen auf die Fahrtrichtung eines nicht dargestellten Fahrzeugs, wo ein hier nicht dargestelltes Lenkrad im Bedienungsbereich gehalten wird. Figur 2 zeigt die Lenksäule 1 in einer Ansicht von der gegenüberliegenden Seite, also von oben rechts gesehen.

Die Lenksäule 1 umfasst eine Manteleinheit 3, die ein Außenmantelrohr 31, ein Zwischenmantelrohr 32 und ein Innenmantelrohr 33 aufweist. Die Mantelrohre 31, 32 und 33 sind axial, in Achsrichtung einer Längsachse L, koaxial ineinander teleskopierend verstellbar angeordnet, wie mit einem Doppelpfeil angedeutet.

An dem Außenmantelrohr 31 ist am hinteren Ende ein Anschlag 34 angebracht, der am offenen Ende nach innen in den Zwischenraum zwischen Außenmantelrohr 31 und Zwischenmantelrohr 32 vorsteht. Beim Herausfahren schlägt das Zwischenmantelrohr 32 axial gegen den Anschlag 34 an, und ist gegen eine Trennung vom Außenmantelrohr 31 gesichert. Am hinteren Ende des Zwischenmantelrohrs 32 ist ein nach innen in den Zwischenraum zwischen Zwischenmantelrohr 32 und Innenmantelrohr 33 vorstehender Anschlag 35 angebracht, der das Innenmantelrohr 33 gegen Herausziehen aus dem Zwischenmantelrohr 32 sichert.

In der Manteleinheit 3 ist um die Längsachse L drehbar eine Lenkspindel 37 gelagert, die an ihrem hinteren Ende einen Anschlussabschnitt 38 zur Anbringung eines nicht dargestellten Lenkrads aufweist. Die Lenkspindel 37 ist wie die Manteleinheit 3 ebenfalls in Längsrichtung teleskopierbar ausgebildet. Eine Stelleinheit 2 umfasst das Innenmantelrohr 33 samt der darin gelagerten Lenkspindel 37. Diese Stelleinheit 2 ist zur Realisierung einer Längsverstellung relativ zur Manteleinheit 3 in dem Außenmantelrohr 31 in Richtung der Längsachse L teleskopartig verschiebbar aufgenommen, um das mit der Lenkspindel 37 verbundene Lenkrad relativ zur Trageinheit 4 in Längsrichtung vor und zurück positionieren zu können, wie mit dem Doppelpfeil parallel zur Längsachse L angedeutet.

Die Manteleinheit 3 ist in einer zweiteiligen Trageinheit 4 gehalten, welche Befestigungsmittel 41 zur Anbringung an einer nicht dargestellten Fahrzeugkarosserie aufweist.

Die Manteleinheit 3 ist in ihrem vorderen Bereich um eine quer zur Längsachse L liegende, schematisch dargestellte horizontale Schwenkachse S verschwenkbar relativ zur Fahrzeugkarosserie gelagert. Hierzu ist ein nicht dargestelltes Schwenklager in der Trageinheit 4 oder zwischen dieser Trageinheit 4 und der Fahrzeugkarosserie angeordnet. Im hinteren Bereich ist die Manteleinheit 3 über einen Stellhebel 42 mit der Trageinheit 2 verbunden. Durch eine Drehbewegung des Stellhebels 42 mittels eines Verstellantriebs 6 (siehe Figur 2) kann die Manteleinheit 3 zusammen mit der Stelleinheit 2 relativ zur Trageinheit 4 um die im Einbauzustand waagerecht liegende Schwenkachse S verschwenkt werden, wodurch eine Verstellung eines an dem Befestigungsabschnitt 38 angebrachten Lenkrads in Höhenrichtung H vorgenommen werden kann, was mit dem Doppelpfeil angedeutet ist.

Ein erster Verstellantrieb 5 zur Längsverstellung der Stelleinheit 2 relativ zur Manteleinheit 3 in Richtung der Längsachse L weist einen Spindeltrieb mit einer Spindelmutter 51 mit einem sich längs einer Spindelachse G erstreckenden Innengewinde 74 auf, in die eine Gewindespindel 52 eingreift, also mit ihrem Außengewinde in das korrespondierende Innengewinde 74 der Spindelmutter 51 eingeschraubt ist. Die Gewindespindelachse der Gewindespindel 52 ist identisch mit der Spindelachse G und verläuft im Wesentlichen parallel zur Längsachse L.

Die Spindelmutter 51 ist um die Spindelachse G drehbar in einem Lagergehäuse 53 gelagert, welches fest mit dem Außenmantelrohr 31 der Manteleinheit 4 verbunden ist. In Richtung der Spindelachse G ist die Spindelmutter 51 axial über das Lagergehäuse 53 an der Manteleinheit 4 abgestützt. Der Verstellantrieb 5 ist entsprechend ein sogenannter Tauchspindelantrieb.

Die Gewindespindel 52 ist an ihrem freien Ende an einem Arm 36 drehfest und axial fest abgestützt mit dem Innenmantelrohr 33 verbunden, und die Spindelmutter 51 stützt sich über die Antriebseinheit 53 axial, d.h. in der Längsrichtung, an dem Außenmantelrohr 31 ab. Die Längsrichtung entspricht der Richtung der Längsachse L. Durch eine relative Drehung mittels des als Elektromotor ausgebildeten Motors 55 werden die Gewindespindel 52 und die Spindelmutter 51 je nach Drehrichtung zusammen oder auseinander bewegt, wodurch das Innenmantelrohr 33 axial in das Zwischenmantelrohr 32, und dieses in das Außenmantelrohr 31 eingefahren oder ausgefahren wird, wie mit dem Doppelpfeil angedeutet. Dadurch kann ein an dem Anschlussabschnitt 38 angebringbares Lenkrad nach vorn in eine Verstauposition gebracht werden, in der das Innenmantelrohr 33 und das Zwischenmantelrohr 32 in das Außenmantelrohr 31 eingefahren, d.h. nach vorn versenkt sind, oder in eine Bedienposition im Bedienbereich, in der die Mantelrohre 31, 32 und 33 teleskopierend auseinander ausgefahren sind.

In Figur 2, welche eine perspektivische Ansicht der Lenksäule 1 von der in Figur 1 hinten liegenden Seite zeigt, ist erkennbar, wie ein zweiter Verstellantrieb 6 zur Verstellung in Höhenrichtung H an der Lenksäule 1 angebracht ist. Dieser Verstellantrieb 6 ist im Prinzip gleichwirkend wie der Verstellantrieb 5 aufgebaut. Er umfasst ebenfalls eine Spindelmutter 61, in deren Innengewinde längs einer Spindelachse G eine Gewindespindel 62 eingreift. Die Gewindespindel 62 ist in einem Lagergehäuse 63, welches an der Manteleinheit 3 befestigt ist, drehbar um die Achse G gelagert und axial, in Richtung der Achse G, an der Manteleinheit 3 abgestützt, und von einem elektrischen Antriebsmotor 65 wahlweise in beide Rotationsrichtungen um die Achse G drehend antreibbar.

Die Verstellantriebe 5 und 6 sind in der dargestellten Ausführung sogenannte Tauchspindelantrieb. Alternativ kann auch ein Rotationsspindelantrieb ausgebildet sein, bei dem die Spindelmutter 51 bezüglich Rotation an der Lenksäule 1 gehalten ist und die Gewindespindel 52 von dem Motor 55 drehend antreibbar ist.

Der Verstellantrieb 6 greift am Ende des zweiarmigen Stellhebels 42 an, der um ein Schwenklager 43 drehbar an der Trageinheit 4 gelagert ist, und dessen anderer Arm mit dem anderen Ende in einem weiteren Schwenklager 44 mit der Manteleinheit 3 verbunden ist.

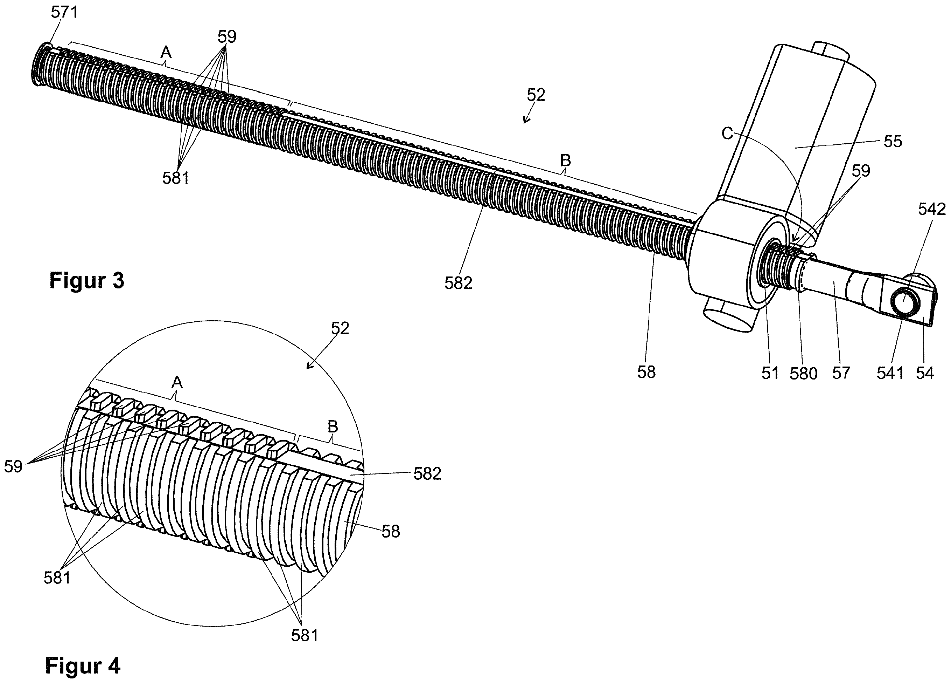

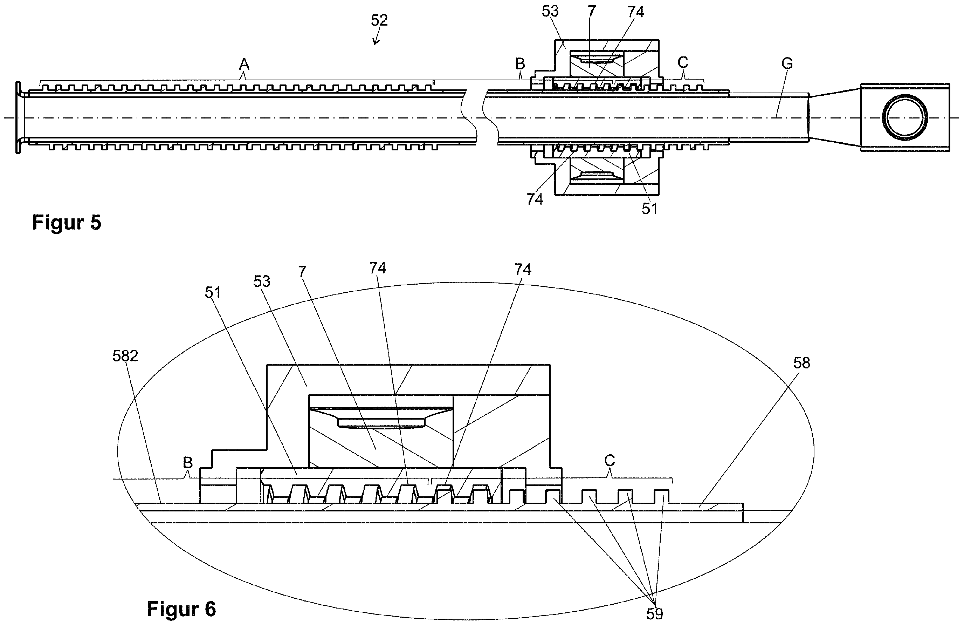

Der Verstellantrieb 5 einzeln ist einzeln in Figur 3 in einer perspektivischen Darstellung gezeigt, und in Figur 5 in einem Längsschnitt entlang der Spindelachse G.

Die erfindungsgemäße Gewindespindel 52 weist ein bevorzugt rohrförmiges Kernelement 57 auf, bevorzugt aus Stahlrohr, auf dem koaxial ein hülsenförmiges Gewindeelement 58 unlösbar angebracht ist, welches das Außengewinde mit einem schraubenförmig umlaufenden Gewindezahn 581 aufweist, und kann im Kunststoff-Spritzguss angespritzt sein kann.

Zur Bildung eines Koppelelements 54, welches als dient, ist das Rohr des Kernelements 57 quer zur Spindelachse G bevorzugt durch Kaltumformung flach verquetscht, und weist eine senkrecht zur Verquetschung durchgehende Befestigungsbohrung 541 auf. Durch diese Befestigungsbohrung 541 ist ein Befestigungsbolzen 542 zur drehfesten Verbindung mit dem Übertragungselement 34 hindurchgeführt, wie in Figur 1 erkennbar ist.

An dem vom Befestigungselement 54 abgewandten Ende weist das Kernelement 57 ein Anschlagelement 571 auf, welches als radial nach außen vorstehender, umlaufender Kragen ausgebildet ist, bevorzugt durch kaltumgeformte Aufweitung des rohrförmigen Kernelements 57.

An seinem dem Befestigungselement 54 zugewandten Ende weist das Gewindeelement 58 ebenfalls ein Anschlagelement 580, welches als umlaufender Vorsprung oder Kragen ausgebildet ist, der mit dem Gewindeelement 58 einstückig im Kunststoff-Spritzguss ausgebildet ist.

Die Gewindespindel 52 weist erfindungsgemäß einen ersten Aktuatorabschnitt A auf, der sich wie in Figur 3 erkennbar über einen Längenabschnitt des Außengewindes erstreckt. Der Aktuatorabschnitt A befindet sich in einem Endbereich der Gewindespindel. Daran schließt sich ein als Übergangsabschnitt B ausgebildeter Längenabschnitt ab. An dem anderen, dem Aktuatorabschnitt A gegenüberliegenden Endbereich der Gewindespindel 52 ist ein zweiter Aktuatorabschnitt C angeordnet, der im Prinzip gleichartig wie dieser ausgebildet sein kann, wobei die Längen des Aktuatorabschnitts A und des Aktuatorabschnitts C unterschiedlich sein können. Im Folgenden wird daher nur auf den Aktuatorabschnitt A Bezug genommen.

Das Gewindeelement 58 weist eine axial durchgehende Abflachung 582 des Außengewindes auf, die deutlich in Figur 4 erkennbar ist, die einen vergrößerten Ausschnitt von Figur 3 zeigt ist. Im Bereich dieser Abflachung 582 hat der Gewindezahn 581 in jedem Umlauf eine Lücke, in der im Aktuatorabschnitt A jeweils ein Vorspannelement 59 ausgebildet ist. Die Vorspannelemente 59 in der ersten Ausführung von Figur 4 sind als radial vorstehende Vorsprünge, Klötze oder Blöcke ausgebildet, welche in axialer Richtung (Längsrichtung) geringfügig breiter sein können als der umlaufende Querschnitt des Gewindezahns 581, also breiter als die axiale Breite des Gewindezahns 581. Die Vorspannelemente 59 können bevorzugt einstückig im Kunststoff-Spritzguss mit dem Gewindeelement 58 ausgebildet sein. Durch elastische Verformung des Kunststoffs können die Vorspannelemente 59 federnd im Gewindegang des Innengewindes der Spindelmutter 51 spielfrei vorgespannt bzw. verspannt sein. Im zweiten Aktuatorabschnitt C sind ebenfalls Vorspannelemente 59 angeordnet, die gleichwirkend wie jene im Aktuatorabschnitt A ausgebildet sein können.

Erfindungsgemäß sind im Übergangsabschnitt B in der gezeigten Ausführung keine Vorspannelemente 59 angeordnet, mit anderen Worten ist der Übergangsabschnitt B vorspannelementfrei ausgebildet. Die durch die Abflachung 582 gebildete Lücke bleibt frei. Dies ist auch in der vergrößerten Schnittdarstellung von Figur 6 erkennbar. Im Bereich der Abflachung 582 greifen die Vorspannelemente 59 mit axialer Vorspannung in die Gewindegänge des Innengewindes 74 der Spindelmutter 61 ein, wodurch eine Verspannung der Gewindespindel 52 in der Spindelmutter 51 erfolgt. Daraus resultiert ein erhöhter Schraubwiderstand, der größer ist als im Übergangsbereich B, in dem durch die dort fehlenden Vorspannelemente keine oder eine geringere Verspannung erfolgt.

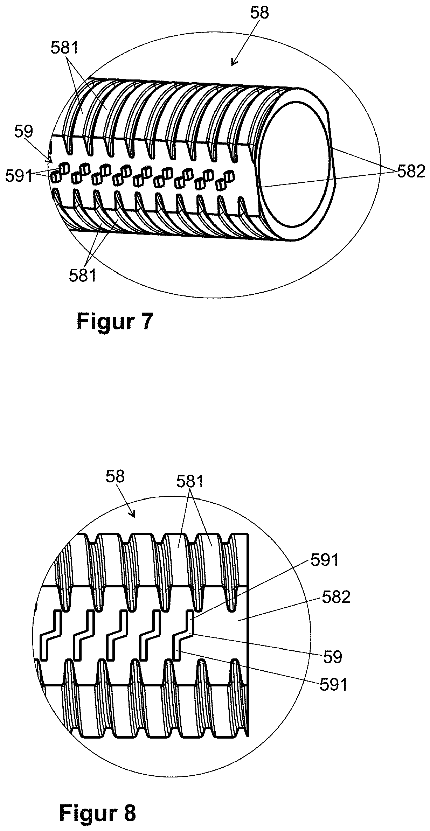

In den Figuren 7 und 8 sind weitere Varianten von Vorspannelementen 59 dargestellt. Das Gewindeelement 58 weist wiederum mindestens eine, bevorzugt zwei gegenüberliegende Abflachungen 582 auf, in denen der Gewindezahn 581 im Umfang eine Lücke hat. In der zweiten Ausführung von Figur 7 weist jedes Vorspannelement 59 zwei radial vorstehende, axial in Richtung der Gewindespindelachse G und in Umfangsrichtung beabstandete, blatt- oder fingerförmige Federelemente 591 auf. Diese sind in axialer Richtung elastisch biegbar, und stehen im unverformten Zustand geringfügig axial über den Querschnitt des Gewindezahns 581 vor. Dadurch sind sie im eingeschraubten Zustand jeweils in einem Gewindegang zwischen den Gewindeflanken in dem Innengewinde der Spindelmutter 51 verspannt.

Die in Figur 8 in einer seitlichen (radialen) Ansicht gezeigte Ausführung ist ähnlich ausgebildet, wobei jedes Federelement 591 als Z-förmiges Federblatt ausgebildet ist, in dem die in Figur 7 paarweisen Federelemente 591 einstückig zusammengefasst sind.

Sämtliche Ausführungen von Federelementen 59, 591 können im Kunststoff-Spritzguss einstückig an dem Gewindeelement 58 ausgebildet sein. Durch ihre Abmessungen kann die Elastizität und die zur Vorspannung ausgeübte Federkraft bedarfsweise angepasst und vorgegeben werden. Dadurch kann die Größe des Schraubwiderstands im Aktuatorabschnitt A und C definiert vorgegeben werden.

Der freie Raum zwischen den Federelementen 591 als Schmierstofftasche genutzt werden.

Die Vorspannelemente 59, 591 können beliebig miteinander kombiniert werden. Beispielsweise können die Aktuatorabschnitte A und C voneinander verschiedene Vorspannelemente 59, 591 aufweisen. Ebenfalls ist es denkbar und möglich, dass in einem Aktuatorabschnitt A, C unterschiedliche Vorspannelemente 59, 591 kombiniert werden.

Durch die Vorspannelemente 59, 591 kann eine spielfreie elastische Verspannung der Gewindespindel 52 in der Spindelmutter 51 erzeugt werden, wenn die Spindelmutter sich in einem der Aktuatorbereiche A oder C befindet, welche mit dem Bedienbereich oder dem Verstaubereich der Lenksäule korrespondieren. Beim Verstauen wird die Spindelmutter 51 aus dem Aktuatorbereich A heraus bewegt. Beim Passieren des Übergangsbereichs B ist der Schraubwiderstand wegen der fehlenden Verspannung geringer, und es kann bei gleicher Antriebleistung eine höhere Verstellgeschwindigkeit realisiert werden. Beim Erreichen des zweiten Aktuatorbereichs C in der Nähe der Verstauposition wirkt wieder ein erhöhter Schraubwiderstand, wie im Aktuatorbereich A. Es kann eine sichere und spielfreie Verstauung mit geringerer Verstellgeschwindigkeit erfolgen. Die Abfolge beim Bereitstellen aus dem Aktuatorbereich C hin zum Aktuatorbereich A ist entsprechend umgekehrt.

Zum drehenden Antrieb durch den Motor 55 kann koaxial an der Spindelmutter 51 ein Getrieberad 7 angebracht sein, wie in Figuren 5 und 6 erkennbar ist. Das Getrieberad 7 kann beispielsweise ein Schneckenrad sein, welches mit einer vom Motor 55 angetriebenen Schneckenwelle in Eingriff steht. Alternativ zu dem in den Figuren 3 bis 6 gezeigten Bauform eines Tauchspindelantriebs, bei dem die Spindelmutter 51 drehend angetrieben wird, kann in der Bauform eines Rotationsspindelantriebs die Gewindespindel 52 relativ zum Getriebegehäuse 53 drehend angetrieben werden. Dann wird das Getrieberad 7 drehfest koaxial auf der Gewindespindel 52 befestigt.

Das Getrieberad 7 kann bevorzugt aus Kunststoff ausgebildet sein und bevorzugt im Kunststoff-Spritzguss an die Spindelmutter 51 oder die Gewindespindel 52 angespritzt werden.

### Bezugszeichenliste

- 1: Lenksäule
- 2: Stelleinheit
- 21: Befestigungsmittel
- 22, 23: Schwenklager
- 3: Manteleinheit
- 31: Außenmantelrohr
- 32: Zwischenmantelrohr
- 33: Innenmantelrohr
- 34, 35: Anschlag
- 36: Arm
- 37: Lenkspindel
- 38: Anschlussabschnitt
- 4: Trageinheit
- 41: Befestigungsmittel
- 42: Stellhebel
- 43, 44: Schwenklager
- 5, 6: Verstellantrieb
- 51, 61: Spindelmutter
- 52, 62: Gewindespindel
- 53, 63: Lagergehäuse
- 54: Koppelelement
- 541: Befestigungsbohrung
- 542: Befestigungsbolzen
- 55, 65: Antriebsmotor
- 57: Kernelement
- 571: Anschlagelement
- 58: Gewindeelement
- 580: Anschlagelement
- 581: Gewindezahn
- 582: Abflachung
- 583: Schmierstofftasche
- 59: Vorspannelement
- 591: Federelement
- 7: Getrieberad
- 74: Innengewinde

- A, C: Aktuatorabschnitt
- B: Übergangsabschnitt
- L: Längsachse
- S: Schwenkachse
- H: Höhenrichtung
- G: Spindelachse (Gewindespindelachse)

## Patentansprüche

1. Verstellantrieb (5, 6) für eine Lenksäule (1) für ein Kraftfahrzeug, umfassend eine Gewindespindel (52, 62), die mit einem Außengewinde in eine Spindelmutter (51, 61) eingreift, und eine Antriebseinheit (55, 65), die mit der Gewindespindel (52, 62) oder der Spindelmutter (51, 61) derart gekoppelt ist, dass die Gewindespindel (52, 62) und die Spindelmutter (51, 61) relativ zueinander drehend unter Überwindung eines Schraubwiderstandes antreibbar sind,
**dadurch gekennzeichnet,**
**dass** die Gewindespindel (52, 62) mindestens einen Aktuatorabschnitt (A, C) und mindestens einen Übergangsabschnitt (B) aufweist, wobei der Übergangsabschnitt (B) derart ausgebildet ist, dass der Schraubwiderstand der Spindelmutter (51, 61) im Übergangsabschnitt (B) kleiner ist als im Aktuatorabschnitt (A, C).

2. Verstellantrieb nach Anspruch 1, **dadurch gekennzeichnet, dass** ein Aktuatorabschnitt (A, C) in einem Endbereich der Gewindespindel (52, 62) angeordnet ist.

3. Verstellantrieb nach einem der vorangehenden Ansprüche, **dadurch gekennzeichnet, dass** mindestens zwei Aktuatorabschnitte (A, C) vorgesehen sind, zwischen denen ein Übergangsabschnitt (B) angeordnet ist.

4. Verstellantrieb nach einem der vorangehenden Ansprüche, **dadurch gekennzeichnet, dass** das Gewindespiel im Übergangsabschnitt (B) größer ist als im Aktuatorabschnitt (A, C).

5. Verstellantrieb nach einem der vorangehenden Ansprüche, **dadurch gekennzeichnet, dass** der Aktuatorabschnitt (A, C) mindestens ein Vorspannelement (59) aufweist, welches gegen einen Gewindegang der Spindelmutter (52, 62) vorgespannt ist, und der Übergangsabschnitt (B) kein Vorspannelement (59) aufweist oder ein Übergangsvorspannelement aufweist, welches schwächer gegen den Gewindegang der Spindelmutter (52, 62) vorgespannt ist als das Vorspannelement (59) des Aktuatorabschnitts (A, C).

6. Verstellantrieb nach Anspruch 5, **dadurch gekennzeichnet, dass** das Vorspannelement (59) im Zahnprofil eines schraubenförmig umlaufenden Gewindezahns (581) des Außengewindes angeordnet ist.

7. Verstellantrieb nach Anspruch 5 oder 6, **dadurch gekennzeichnet, dass** das Vorspannelement (59) mindestens ein Federelement (591) aufweist.

8. Verstellantrieb nach einem der Ansprüche 5 bis 7, **dadurch gekennzeichnet, dass** das Vorspannelement (59) einen Schmiermittelabstreifer aufweist.

9. Verstellantrieb nach einem der vorangehenden Ansprüche, **dadurch gekennzeichnet, dass** das Außengewinde im Übergangsabschnitt (B) reibungsvermindernd und/oder im Aktuatorabschnitt (A, C) reibungserhöhend ausgestaltet ist.

10. Verstellantrieb nach einem der vorangehenden Ansprüche, **dadurch gekennzeichnet, dass** die Gewindespindel (52) ein Kernelement (57) aufweist, welches zumindest abschnittweise koaxial fest umgeben ist von einem Gewindeelement (58), welches das Außengewinde aufweist.

11. Verstellantrieb (nach Anspruch 10, **dadurch gekennzeichnet, dass** das Gewindeelement (58) aus einem Kunststoff ausgebildet ist.

12. Verstellantrieb nach einem der Ansprüche 10 bis 11, **dadurch gekennzeichnet, dass** das Gewindeelement (58) an dem Kernelement (57) im Kunststoff-Spritzguss angespritzt ist.

13. Verstellantrieb (5) nach einem der Ansprüche 10 bis 12, **dadurch gekennzeichnet, dass** das Kernelement (57) aus einem metallischen Werkstoff ausgebildet ist.

14. Verstellantrieb (5) nach einem der Ansprüche 10 bis 13, **dadurch gekennzeichnet, dass** das Kernelement (57) mindestens ein mit dem Gewindeelement (58) formschlüssig verbundenes Formschlusselement aufweist.

15. Lenksäule (1) für ein Kraftfahrzeug, mit einer Trageinheit (2), die an einer Fahrzeugkarosserie anbringbar ist, und von der eine Stelleinheit (3) gehalten ist, in der eine Lenkspindel (37) drehbar gelagert ist, und mit einem Verstellantrieb (5, 6), der eine Gewindespindel (52, 62), die mit einem Außengewinde in eine Spindelmutter (51, 61) eingreift, und eine Antriebseinheit (55, 65) umfasst, der mit der Gewindespindel (52, 62) oder der Spindelmutter (51, 62) derart gekoppelt ist, dass die Gewindespindel (52, 62) und die Spindelmutter (51, 61) relativ drehend zueinander antreibbar sind, wobei der Verstellantrieb (5, 6) mit der Trageinheit (2) oder der Stelleinheit (3) verbunden ist,
**dadurch gekennzeichnet,**
**dass** der Verstellantrieb (5, 6) ausgebildet ist gemäß einem der Ansprüche 1 bis 14.

## Claims

1. An adjusting drive (5, 6) for a steering column (1) for a motor vehicle, comprising a threaded spindle (52, 62) which engages with an external thread in a spindle nut (51, 61), and a drive unit (55, 65) which is coupled to the threaded spindle (52, 62) or the spindle nut (51, 61) such that the threaded spindle (52, 62) and the spindle nut (51, 61) are able to be rotatably driven relative to one another by overcoming a screw resistance,
**characterized in that**
the threaded spindle (52, 62) has at least one actuator portion (A, C) and at least one transition portion (B), wherein the transition portion (B) is configured such that the screw resistance of the spindle nut (51, 61) is lower in the transition portion (B) than in the actuator portion (A, C).

2. The adjusting drive as claimed in claim 1, **characterized in that** an actuator portion (A, C) is arranged in an end region of the threaded spindle (52, 62).

3. The adjusting drive as claimed in one of the preceding claims, **characterized in that** at least two actuator portions (A, C) are provided, a transition portion (B) being arranged therebetween.

4. The adjusting drive as claimed in one of the preceding claims, **characterized in that** the thread clearance in the transition portion (B) is greater than in the actuator portion (A, C).

5. The adjusting drive as claimed in one of the preceding claims, **characterized in that** the actuator portion (A, C) has at least one pretensioning element (59) which is pretensioned against a thread of the spindle nut (52, 62), and the transition portion (B) has no pretensioning element (59) or has a transition pretensioning element which is pretensioned more weakly against the thread of the spindle nut (52, 62) than the pretensioning element (59) of the actuator portion (A, C).

6. The adjusting drive as claimed in claim 5, **characterized in that** the pretensioning element (59) is arranged in the tooth profile of a helically circulating thread tooth (581) of the external thread.

7. The adjusting drive as claimed in claim 5 or 6, **characterized in that** the pretensioning element (59) has at least one spring element (591).

8. The adjusting drive as claimed in one of claims 5 to 7, **characterized in that** the pretensioning element (59) has a lubricant scraper.

9. The adjusting drive as claimed in one of the preceding claims, **characterized in that** the external thread is designed to reduce friction in the transition portion (B) and/or to increase friction in the actuator portion (A, C).

10. The adjusting drive as claimed in one of the preceding claims, **characterized in that** the threaded spindle (52) has a core element (57) which is fixedly surrounded at least in some portions in the coaxial direction by a threaded element (58) which comprises the external thread.

11. The adjusting drive as claimed in claim 10, **characterized in that** the threaded element (58) is configured from a plastics material.

12. The adjusting drive as claimed in one of claims 10 to 11, **characterized in that** the threaded element (58) is injection-molded on the core element (57) by plastics injection-molding.

13. The adjusting drive (5) as claimed in one of claims 10 to 12, **characterized in that** the core element (57) is formed from a metal material.

14. The adjusting drive (5) as claimed in one of claims 10 to 13, **characterized in that** the core element (57) has at least one positive connection element which is positively connected to the threaded element (58).

15. A steering column (1) for a motor vehicle, comprising a supporting unit (2) which is able to be attached to a vehicle body and by which an actuating unit (3) is held, a steering spindle (37) being rotatably mounted therein, and comprising an adjusting drive (5, 6) which comprises a threaded spindle (52, 62) which engages with an external thread in a spindle nut (51, 61), and a drive unit (55, 65) which is coupled to the threaded spindle (52, 62) or the spindle nut (51, 61), such that the threaded spindle (52, 62) and the spindle nut (51, 61) are able to be rotatably driven relative to one another, wherein the adjusting drive (5, 6) is connected to the supporting unit (2) or the actuating unit (3),
**characterized in that**
the adjusting drive (5, 6) is configured as claimed in one of claims 1 to 14.

## Revendications

1. Actionneur de réglage (5, 6) pour une colonne de direction (1) pour un véhicule automobile, comprenant une broche filetée (52, 62) qui s'engage par un filetage extérieur dans un écrou de broche (51, 61), et une unité d'entraînement (55, 65) qui est couplée à la broche filetée (52, 62) ou à l'écrou de broche (51, 61) de telle sorte que la broche filetée (52, 62) et l'écrou de broche (51, 61) peuvent être entraînés en rotation l'un par rapport à l'autre en surmontant une résistance de vissage,
**caractérisé en ce que**
**que** la broche filetée (52, 62) présente au moins une section d'actionneur (A, C) et au moins une section de transition (B), la section de transition (B) étant conçue de telle sorte que la résistance au vissage de l'écrou de broche (51, 61) est plus faible dans la section de transition (B) que dans la section d'actionneur (A, C).

2. Actionneur selon la revendication 1, **caractérisé en ce qu'**une section d'actionneur (A, C) est disposée dans une zone d'extrémité de la tige filetée (52, 62).

3. Actionneur selon l'une des revendications précédentes, **caractérisé en ce qu'**il est prévu au moins deux sections d'actionneur (A, C) entre lesquelles est disposée une section de transition (B).

4. Actionneur selon l'une des revendications précédentes, **caractérisé en ce que** le jeu de filetage est plus important dans la section de transition (B) que dans la section d'actionneur (A, C).

5. Actionneur selon l'une des revendications précédentes, **caractérisé en ce que** la section d'actionneur (A, C) présente au moins un élément de précontrainte (59) qui est précontraint contre un pas de vis de l'écrou de broche (52, 62), et la section de transition (B) ne présente pas d'élément de précontrainte (59) ou présente un élément de précontrainte de transition qui est plus faiblement précontraint contre le pas de vis de l'écrou de broche (52, 62) que l'élément de précontrainte (59) de la section d'actionneur (A, C).

6. Actionneur selon la revendication 5, **caractérisé en ce que** l'élément de précontrainte (59) est disposé dans le profil de dent d'une dent filetée (581) périphérique hélicoïdale du filetage extérieur.

7. Actionneur selon la revendication 5 ou 6, **caractérisé en ce que** l'élément de précontrainte (59) présente au moins un élément de ressort (591).

8. Actionneur selon l'une des revendications 5 à 7, **caractérisé en ce que** l'élément de précontrainte (59) comporte un racleur de lubrifiant.

9. Actionneur selon l'une des revendications précédentes, **caractérisé en ce que** le filetage extérieur est conçu pour réduire la friction dans la section de transition (B) et/ou pour augmenter la friction dans la section d'actionneur (A, C).

10. Actionneur selon l'une des revendications précédentes, **caractérisé en ce que** la tige filetée (52) présente un élément central (57) qui est entouré de manière fixe coaxialement, au moins par sections, par un élément fileté (58) qui présente le filetage extérieur.

11. Actionneur selon la revendication 10, **caractérisé en ce que** l'élément fileté (58) est réalisé en une matière plastique.

12. Actionneur selon l'une des revendications 10 à 11, **caractérisé en ce que** l'élément fileté (58) est injecté sur l'élément central (57) par moulage par injection de matière plastique.

13. Actionneur (5) selon l'une des revendications 10 à 12, **caractérisé en ce que** l'élément central (57) est réalisé en un matériau métallique.

14. Actionneur (5) selon l'une des revendications 10 à 13, **caractérisé en ce que** l'élément de noyau (57) présente au moins un élément à complémentarité de forme relié par complémentarité de forme à l'élément fileté (58).

15. Colonne de direction (1) pour un véhicule automobile, avec une unité de support (2) qui peut être montée sur une carrosserie de véhicule et par laquelle est maintenue une unité de réglage (3) dans laquelle un arbre de direction (37) est logé de manière rotative, et avec un actionneur de réglage (5, 6) qui comprend une broche filetée (52, 62) qui est engagée par un filetage extérieur dans un écrou de broche (51, 61), et une unité d'entraînement (55, 65) qui est couplée à la broche filetée (52, 62) ou à l'écrou de broche (51, 62) de telle sorte que la broche filetée (52, 62) et l'écrou de broche (51, 61) peuvent être entraînés en rotation l'un par rapport à l'autre, l'actionneur de réglage (5, 6) étant relié à l'unité de support (2) ou à l'unité de réglage (3),
**caractérisé en ce que**
**en ce que** l'actionneur de réglage (5, 6) est réalisé selon l'une des revendications 1 à 14.
